Europäisches Patentamt

European Patent Office

Office européen des brevets

(19)

(11) Veröffentlichungsnummer: **0 040 689**
**A1**

(12) **EUROPÄISCHE PATENTANMELDUNG**

(21) Anmeldenummer: **81102705.1**

(22) Anmeldetag: **09.04.81**

(51) Int. Cl.³: **H 02 J 13/00**

(30) Priorität: **27.05.80 DE 3020099**

(43) Veröffentlichungstag der Anmeldung: **02.12.81**
Patentblatt 81/48

(84) Benannte Vertragsstaaten: **AT DE FR GB IT SE**

(71) Anmelder: **MicroTec Electronic GmbH,**
**Lena-Christ-Strasse 50, D-8033 Martinsried (DE)**

(72) Erfinder: **Teichmann, Michael F., Dipl.-Ing.,**
**Hauptstrasse 108, D-8132 Tutzing (DE)**

(74) Vertreter: **Seeger, Wolfgang, Dipl.-Phys., European**
**Patent Attorney Bereiteranger 15,**
**D-8000 München 90 (DE)**

(54) **Anordnung zur Einstellung und Voreinstellung von Ein- und Ausschaltvorgängen und von Zustandsbereichen.**

(57) Die Erfindung betrifft eine Anordnung zur Einstellung und Voreinstellung von Ein- und Ausschaltvorgängen und von Zustandsbereichen in verschiedenen Räumen von Gebäuden von einem Raum aus. Sie ist gekennzeichnet durch eine zentrale Steuer- und Monitoreinheit (CCU), welche über das Stromnetz des Gebäudes kommunizierend mit einer Anzahl von, z. B. n, dezentralen Steuereinheiten (DCU) verbunden ist, welche die gewünschten Schalt- oder Steuerschritte auslösen. Die zentralen Steuereinheiten (DCU) können mit Schaltern elektrischer Einrichtungen (MOT, VP) verbunden sein.

0040689

MicroTec Electronic GmbH          67 Pat 1-EP
Lena-Christ-Straße 50
8033 Martinsried

Anordnung zur Einstellung und Voreinstellung
von Ein- und Ausschaltvorgängen und
von Zustandsbereichen

Die Erfindung betrifft eine Anordnung zur Einstellung
und zur Voreinstellung von Ein- und Ausschaltvorgängen
und von Zustandsbereichen in verschiedenen Räumen
von Gebäuden.

Solche Anordnungen sind in einfachster Form Lichtschalter, welche über eine Leitung die Einschaltung
oder Ausschaltung einer Lampe in einem anderen
Raum ermöglichen.

Bei diesen Anordnungen ist für jede zu schaltende
Lampe eine separate zweiadrige oder, falls Erdleiter
vorgeschrieben sind, sogar eine dreiadrige Leitung
erforderlich. Will man nachträglich für eine Lampe
einen Schalter in einem anderen Raum als dem,
in welchem die Lampe sich befindet, haben, so
gibt es üblicherweise drei Möglichkeiten: Man verwendet ein frei am Boden liegendes Kabel, was zum einen unschön ist und außerdem leicht zu einem Stolperdraht werden kann. Die zweite Möglichkeit besteht darin, eine Aufputzleitung zu verlegen, was allgemein als optisch unschön empfunden wird. Die dritte Möglichkeit ist die Verlegung einer Unterputzleitung, was - selbst bei der Erstellung von Neubauten - nur mit sehr großem Aufwand durchführbar ist.

Will man nicht nur eine, sondern mehrere Lampen in verschiedenen Räumen von einem Raum aus schalten können, so sind im allgemeinen entsprechend viele Leitungen erforderlich, wodurch sich die obigen Nachteile noch entsprechend vervielfältigen.

Aufgabe der Erfindung ist es, eine Anordnung zu schaffen, welche die Einstellung und die Voreinstellung von Ein- und Ausschaltvorgängen und von Zustandsbereichen in verschiedenen Räumen von Gebäuden von einem Raum aus ermöglicht, welche die Nachteile der oben geschilderten Anordnungen vermeidet, mit geringem Kostenaufwand herstellbar ist und auch nach Fertigstellung des Gebäudes ohne großen Aufwand herstellbar ist.

Die Aufgabe der Erfindung ist durch das Kennzeichen des Anspruchs 1 gelöst.

Mit der Erfindung wird eine erstaunliche Vielzahl von Vorteilen erzielt:

Zum einen ist der Vorteil zu nennen, daß Leitungen verwendet werden, welche ohnehin in dem Gebäude vorhanden sind, nämlich die Leitungen des Stromnetzes. Dieser Vorteil wird unabhängig davon erzielt, welche Art von Stromleitung im Gebäude vorhanden ist, sowohl bei 110 Volt- als auch bei 220 Volt-Netzen, sowohl bei Gleichstrom- als auch bei Wechselstromnetzen, sowohl bei 50 Hz- als auch bei 60 Hz-Wechselstromnetzen.

Für die erfindungsgemäße Anordnung müssen somit keine separaten Leitungen von dem Raum, von dem aus die Fernsteuerung erfolgen soll, zu den dezentralen Steuereinheiten verlegt werden. Dadurch wird zum einen viel Material gespart. Zum anderen ist diese erfindungsgemäße Anordnung auch deshalb besonders kostengünstig, weil sie auch nachträglich in beliebige Gebäude eingebaut oder einfach eingesetzt werden kann.

Ein weiterer, ganz erheblicher Vorteil der vorliegenden Erfindung liegt darin, daß der Benutzer sich nicht festlegen muß, wo er seine zentrale Steuer- und Monitoreinheit haben möchte. Selbst wenn die gesamte Anordnung oder Anlage bereits installiert ist, kann er sie in denkbar einfacher Weise umbauen. Nicht nur wenn er die gesamte Wohnung umräumt, sondern auch zu beliebigen Zeiten hat er diese Möglichkeit. Zu diesem Zweck muß er nur den Stecker der zentralen Steuer- und Monitoreinheit aus der Steckdose ziehen, diese Steuer- und Monitoreinheit in ein anderes Zimmer mitnehmen, zum Beispiel

- 4 -

0040689

abends in das Schlafzimmer, und dort den Stecker dieser Einheit wieder in die nächste Steckdose stecken.

Aber auch der Umbau der Anordnung in den einzelnen Räumen ist denkbar einfach, weil eine zusätzliche dezentrale Steuereinheit oder eine zu verlegende dezentrale Steuereinheit einfach durch Anschluß an das vorhandene Stromnetz gleichzeitig mit der zentralen Steuer- und Monitoreinheit verbunden wird, ganz gleich in welchem Raum der Wohnung und an welcher Stelle sich dort die zentrale Steuer- und Monitoreinheit befindet.

Die Erfindung weist weiterhin den Vorteil auf, daß sie sowohl innerhalb eines geschlossenen Raumes als auch in Ein- und Mehrfamilienhäusern als auch in beliebig großen Büro- oder Fabrikgebäuden verwendbar ist. Je mehr dezentrale Steuereinheiten zur Auslösung von Schalt- oder Steuerschritten von der Zentrale aus ferngesteuert werden sollen und je weiter fort von der Zentrale diese dezentralen Steuereinheiten angeordnet sind, umso stärker kommt der durch die Erfindung erzielte Vorteil der Materialersparnis und der Ersparnis an Arbeitsaufwand zum Tragen.

Die dezentralen Steuereinheiten können mit Schaltern elektrischer Einrichtungen verbunden sein. Solche Einrichtungen können im einfachsten Fall Lampen sein, es können aber auch z.B. Schalter einer Kaffeemaschine, eines Radios oder eines Backofens
sein.

Nach einer Weiterbildung der Erfindung sind Motoren
vorgesehen, welche von den dezentralen Steuereinheiten
steuerbar sind. Diese Motoren können mit Stellgliedern
verbunden sein. Diese Weiterbildung der Erfindung
ermöglicht ihre Anwendung auf die Fernsteuerung
nahezu beliebiger einstellbarer Gegenstände des
Hauses, z.B. von Rolläden, Jalousien oder dergleichen.
Dabei können die zu steuernden Einrichtungen entweder
von einer Endstellung in die andere Endstellung gesteuert werden, oder aber, mit Hilfe der Stellglieder,
auch in gewünschte Zwischenstellungen.

Zweckmäßigerweise weisen sowohl die zentrale Steuer-
und Motoreinheit, also auch die dezentralen Steuereinheiten Netz-Schnittstellen auf. Diese Schnittstellen
dienen zur Trennung der Niederspannungselektronik
von der Stromspannung und gleichzeitig zur Übertragung
der Signale von der Elektronik auf das Netz und
umgekehrt zur Übertragung der Signale von dem
Netz in die zentrale Steuereinheit bzw. in die
dezentralen Steuereinheiten.

Die dezentralen Steuereinheiten sind nach einer
anderen Seite der Erfindung direkt mit den Stellgliedern verbunden. Diese direkte Verbindung kann
über eine ganz normale Leitung erfolgen.

Ein besonderes Problem in der Haustechnik bildet
stets die Heizung desselben. Bei Zentralheizungsanla-

gen in Ein- oder Mehrfamilienhäusern wird die Heizung über einen zentralen Thermostaten derart gesteuert, daß das Heizungswasser oder die Heizungsluft im Brenner immer derartig erhitzt wird, daß die einzelnen Räume des Hauses gewisse Minimal- oder Maximaltemperaturen aufweisen können. In der Regel wird diese Zentralsteuerung auf Maximaltemperatur eingestellt sein, um bei Bedarf kurzfristig die benötigte Heizenergie in jedem gewünschten Raum zur Verfügung zu stellen. In den einzelnen Räumen sind an den Heizkörpern mechanische oder thermostatische Ventile angebracht, die vom Benutzer einzeln eingestellt werden müssen, wenn er den Raum heizen will. Hierbei ist festzustellen, daß bei rein mechanischen Ventilen der Benutzer in der Regel nur "auf" oder "zu" einstellt, während bei Thermoventilen ein angenäherter Temperaturbereich eingestellt werden könnte. Letzterer kann die Raumtemperatur im Prinzip konstant halten, wenn auch nur verzögert, jedoch auch diese Möglichkeit wird nur von den wenigsten Benutzern tatsächlich ausgenutzt. Erfahrungsgemäß nutzen diese Systeme deshalb nur sehr wenig, weil die Überprüfung und das Herausfinden ihrer zweckmäßigsten Stellung etwas mühsam ist und keine geeigneten Kontrollmöglichkeiten vorgegeben sind. In der Regel sind die Räume in Gebäuden zu kalt oder zu warm, wobei sehr häufig im letzteren Fall die Fenster geöffnet werden, um die Warmtemperatur wieder abzukühlen. Aus diesen Gründen wird sehr viel Primärenergie unnötig verschwendet.

Hinzu kommt das Problem, daß bei günstiger Ausnutzung der Heizenergie der Benutzer die Einstellung an jedem Heizkörper in jedem Raum täglich mehrmals vornehmen solte, um den Energieverbrauch den sich im Tagesverlauf ändernden tatsächlichen Heizbedürfnissen anzupassen. Das ist natürlich mit Aufwand verbunden und wird daher nicht durchgeführt. Die Folge ist, daß Heizkörper in Räumen, die nur zeitweise benutzt werden, ständig angestellt bleiben, was wiederum zu erhöhtem Energieverbrauch und damit zu einer Energieverschwendung führt. Es ist einfach eine Tatsache, daß so gut wie kein Raum individuell und entsprechend dem tatsächlichen Bedarf beheizt wird.

Dieses Problem wird durch eine bevorzugte Weiterbildung gelöst, nach welcher die dezentralen Steuereinheiten kommunizierend mit Fühlern verbunden sind. Diese Fühler können Temperaturfühler sein, welche im Abstand von den dezentralen Steuereinheiten angeordnet sind, oder welche zusammen mit einer dezentralen Steuereinheit in einer einzigen Baueinheit angeordnet sind. Es können auch mehrere Temperaturfühler in einem Raum angeordnet sein, welche alle mit einer dezentralen Steuereinheit in diesem Raum kommunizieren. Mit dieser Weiterbildung dieser Erfindung ist es möglich, von der zentralen Steuer- und Monitoreinheit aus in jedem beliebigen Raum die gewünschte Temperatur einzustellen, wodurch erhebliche Heizkosten eingespart werden können.

Aber auch diese Weiterbildung der Erfindung ist keineswegs auf die Anwendung der Heizregulierung beschränkt. Statt Temperaturfühlern können auch andere Fühler vorgesehen sein, z.B. Rauchfühler, welche ein Alarmsignal bei der zentralen Steuer- und Monitoreinheit auslösen, wenn die Rauchmenge in einem Raum einen bestimmten Schwellwert überschreitet. Diese Weiterbildung der Erfindung kann somit z.B. gleichzeitig als Feuermelder verwendet werden. Diese Anlage kann gleichzeitig auch als Feuermelder mit Alarmzeichen in der Zentrale verwendet werden. Somit kann bei Ausbrechen eines Brandes mit Hilfe der zentralen Steuereinrichtung über die dezentralen Steuereinrichtungen die Sprinkleranlage genau in den gewünschten Räumen und an den gewünschten Stellen in Betrieb gesetzt werden.

Es ist möglich, sowohl die dezentralen Steuereinheiten als auch die Fühler und die Stelleinrichtung jeweils innerhalb einer gemeinsamen Baueinheit anzuordnen. Diese Weiterbildung der Erfindung erlaubt es, in den verschiedenen Räumen mit jeweils nur einer Baueinheit auszukommen.

Die zentrale Steuer- und Monitoreinheit umfaßt nach einer Weiterbildung der Erfindung einen Mikroprozessor und eine zugeordnete Logikschaltung. Diese Weiterbildung der Erfindung ermöglicht eine Anordnung, welche aufgrund der von den verschiedenen Fühlern festgestellten Zuständen selbständig ermittelt, welche Schaltvorgänge oder Schaltschritte vorgenommen werden müssen und welche Stellglieder in welche Position gefahren werden sollten, und welche dann diese Vorgänge auslöst.

Die zentrale Steuer- und Monitoreinheit umfaßt nach einer anderen Weiterbildung der Erfindung ein Tastenfeld zur Dateneingabe und eine Sichtanzeige. Diese Weiterbildung der Erfindung ermöglicht die Eingabe gewünschter Sollwerte in die Einrichtung, wobei die Sichtanzeige gleichzeitig die Kontrolle über die Richtigkeit der vorgenommenen Eingabe ermöglicht. Auf dem Sichtfeld können aber auch die von den Fühlern in den verschiedenen Räumen gemessenen Zustände sichtbar gemacht werden. Mit Hilfe dieser Ausführungsform ist auch die Programmierung der gesamten Anordnung ermöglicht.

Zweckmäßigerweise kann die Steuer- und Monitoreinheit eine akustische Alarmeinheit enthalten. Nach einer anderen Weiterbildung der Erfindung enthält sie auch eine elektronische Uhr, welche entweder von einer Batterie gespeist sein oder eine batteriegespeiste Pufferschaltung aufweisen kann. Mit Hilfe dieser Uhr können zu beliebigen Zeiten gewünschte Zustände, die im voraus über das Tastenfeld eingegeben werden, zur gewünschten Zeit hergestellt werden. Wenn die Uhr entweder von einer Batterie gespeist wird oder aber eine Pufferschaltung aufweist, mißt sie auch dann weiterhin die Zeit, wenn die zentrale Steuereinheit vom Netz getrennt ist, z.B. weil sie in einen anderen Raum getragen werden soll.

Nach einer anderen Weiterbildung können auch die dezentralen Steuereinheiten jeweils einen Mikroprozessor und eine zugeordnete Logik umfassen. Damit wird die gesamte Anordnung für die Steuerung und Regelung der gesamten Haustechnik anwendbar. Allein bei der Heizung können mit dieser erfindungsgemäßen Anordnung 25 bis 50 % des sonst erforderlichen Energiebedarfs eingespart werden.

Erhebliche Energieersparung wird auch bei Anwendung der erfindungsgemäßen Anordnung zur Steuerung von Klimaanlagen in den verschiedenen Räumen eines Gebäudes eingespart werden.

Die genannten Stelleinrichtungen können mit Drehschiebern, Schieberventilen, Dämpfern und Schließ- oder anderen mechanischen Einrichtungen verbunden sein, z.B. mit Motoren zur Betätigung von Rolläden oder Jalousien.

Nach einer anderen Ausführungsform der Erfindung ist die Anzeige der Heizkosten pro Stunde bei der gegenwärtigen Heizleistung auf der Anzeige darstellbar. Zu diesem Zweck kann vorteilhafterweise ein mit einer dezentralen Steuereinheit verbundener Fühler zum Fühlen der pro Zeiteinheit durch die Brennstoffleitung strömende Brennstoffmenge vorgesehen sein. Aufgrund der Durchflußgeschwindigkeit und damit der Durchflußmenge pro Zeit kann über den Preis des Brennstoffs pro Menge leicht der gegenwärtige Verbrauch in Geldwert pro Zeiteinheit ausgerechnet und an der zentralen Steuer- und Monitoreinrichtung angezeigt werden.

Selbstverständlich erlaubt die Erfindung es auch, die jeweils über längere Zeitintervalle, z.B. während einer Woche, verbrauchten Brennstoffmengen zu speichern und diesen Wert, auf Wunsch multipliziert mit dem Preis pro Menge, auf der zentralen Steuer- und Monitoreinrichtung anzuzeigen.

Ein weiterer ganz wesentlicher Vorteil der Erfindung liegt darin, daß diese Anordnung so programmierbar ist, daß sie selbständig lernt, wie Heizkosten eingespart werden. Ausgehend davon, daß zunächst die Temperatur des Heizwassers eine bestimmte Differenz zur Außentemperatur aufweist, kann zunächst während einer Zeit von z.B. 3 Tagen der Brennstoffverbrauch gemessen und dieser Wert gespeichert werden. Anschliessend kann der Temperaturgradient zwischen Heizwassertemperatur und der Temperatur außerhalb des Gebäudes erhöht werden, und nach 3 Tagen kann der Wert der verbrauchten Brennstoffmenge mit dem Wert der Brennstoffmenge verglichen werden, welche in dem zuvor liegenden Zeitintervall verbraucht wurde. Selbstverständlich können beliebige geeignete Algorithmen vorgegeben werden, welche dann selbsttätig von der erfindungsgemäßen Anordnung durchgeführt werden können mit dem Erfolg, daß der Energieverbrauch automatisch minimiert wird.

Selbstverständlich kann mit der vorliegenden Erfindung auch der Mischer des Zentralheizungssystems so geregelt werden, daß der Energiebedarf minimiert wird.

Es kann ein Scanner vorgesehen sein, welcher ständig zyklisch die Zustände der verschiedenen Fühler und/oder der Stellungen der verschiedenen Stelleinrichtungen abfragt. Auf diese Weise wird eine ständige Überwachung gewährleistet.

Vorteilhafterweise sind nicht-flüchtige Speicher vorgesehen. Diese gewährleisten, daß auch bei Ausfall des Stroms des Hausnetzes die einprogrammierten und die bereits gemessenen Werte nicht verloren gehen, sondern gespeichert bleiben.

Vorteilhafterweise sind Einrichtungen zur Speisung der Elektronik aus dem Stromnetz vorgesehen.

Die Erfindung ist im folgenden anhand eines Ausführungsbeispiels und in Verbindung mit der Zeichnung näher beschrieben. In letzterer zeigen:

Fig. 1    eine schematische Anordnung gemäß der Erfindung (mit einer zentralen Steuer- und Monitoreinheit) mit dezentralen Steuereinheiten und mit Stellgliedern,

Fig. 2    eine weitere schematische Schaltungsanordnung gemäß der Erfindung (in welcher verschiedene Komponenten der zentralen Steuer- und Monitorein-

0040689

heit dargestellt sind),

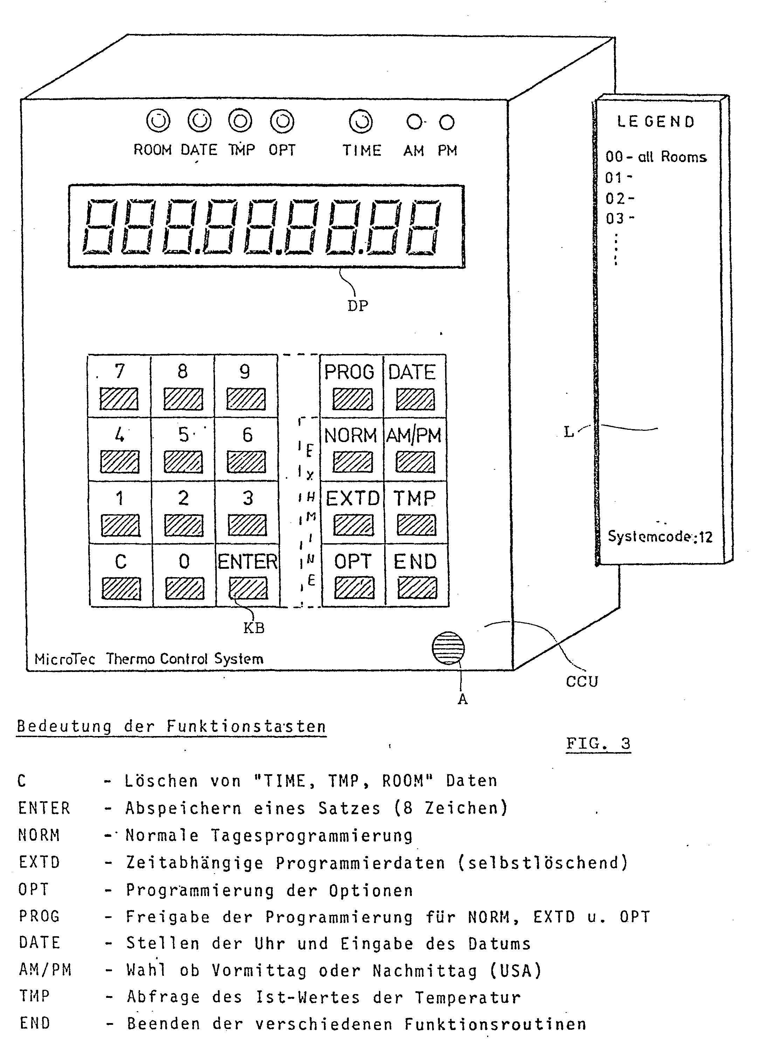

Fig. 3     eine perspektivische Ansicht der
           zentralen Steuer- und Monitoreinheit
           mit Legende.

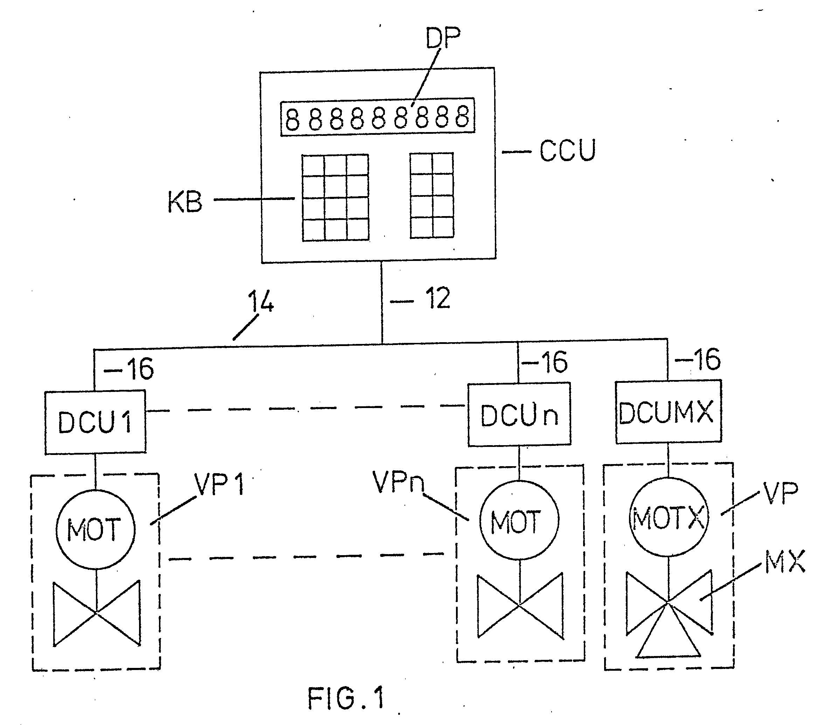

In Figur 1 ist eine zentrale Steuer- und Monitoreinheit CCU dargestellt, welche ein Tastenfeld KB
und eine Sichtanzeige DP enthält. Diese zentrale
Steuer- und Monitoreinheit CCU ist über eine Leitung
12 mit dem Stromnetz 14 des Gebäudes verbunden.
Diese Verbindung geschieht in üblicher Weise mit
Hilfe einer Leitung und eines Steckers, der in
eine Netzdose eingesteckt ist.

In dieser Figur sind ferner n dezentrale Steuereinheiten DCU 1 bis DCU n dargestellt, welche jeweils
über eine Leitung 16 mit dem Stromnetz des Gebäudes
verbunden sind. Jede dieser dezentralen Steuereinheiten DCU ist über eine Leitung 18 mit einem
Motor MOT verbunden, welcher seinerseits jeweils
mit einem der Ventile PU 1, ... PU n verbunden ist.
Bei diesem Ausführungsbeispiel sind die Ventile
Heizkörperventile.

Wie in dem rechten Teil der Figur sichtbar ist,
ist ferner eine dezentrale Steuereinheit DCU (MX)
vorgesehen, welche mit einem Motor MOT X verbunden
ist, der seinerseits mit einem Mischventil MX
verbunden ist.

Wie man an dieser einfachen Prinzipskizze bereits

0040689

erkennt, sind zur Installation der gesamten Anordnung lediglich Leitungsverbindungen von den Steuereinheiten zur jeweils nächsten Steckdose erforderlich. Die dezentralen Steuereinheiten DCU schalten Motoren, welche die verschiedenen Ventile öffnen und schließen. Für die Verbindung von den dezentralen Steuereinheiten zu dem jeweils zugeordneten Motor sind im Ausführungsbeispiel ebenfalls feste Leitungen vorgesehen. Es sind aber auch drahtlose Verbindungen möglich.

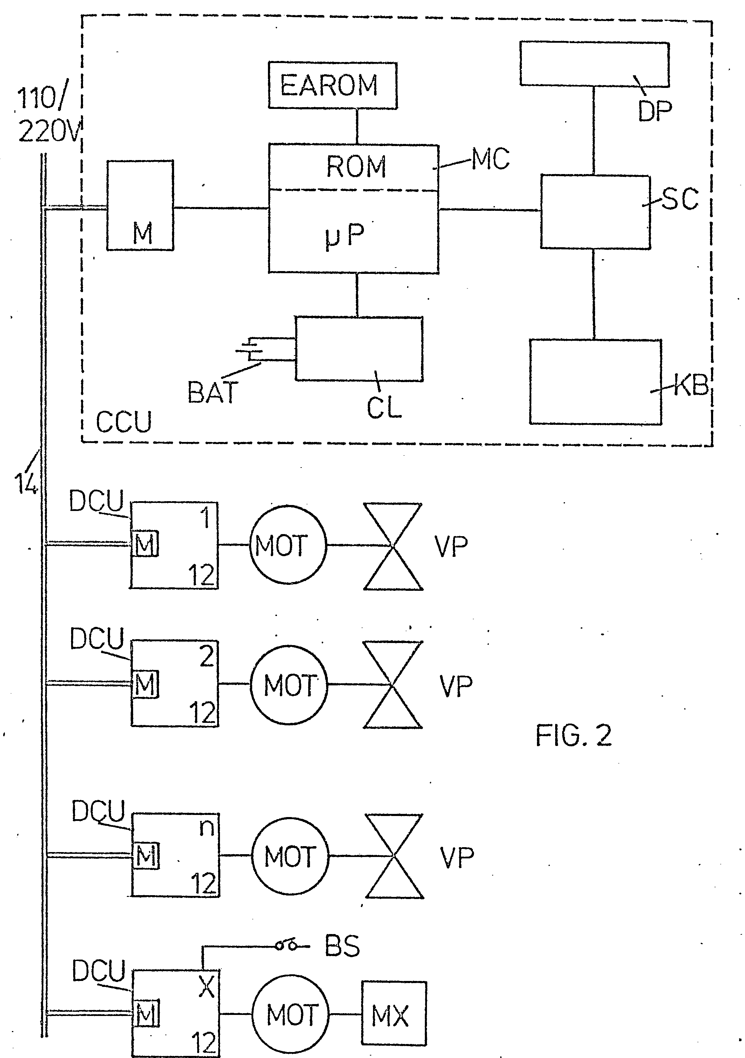

In Figur 2 sind in dem durch gestrichelte Linien 20 eingegrenzten Schild verschiedene Komponenten der zentralen Steuer- und Monitoreinheit CCU dargestellt.

Im mittleren Bereich dieses Feldes ist ein Mikrocomputer MC dargestellt, welcher im wesentlichen aus einem Mikroprozessor MP und einem Nur-Lese-Speicher (ROM) besteht. Dieser Mikrocomputer MC kommuniziert mit einem elektrisch änderbaren Nur-Lese-Speicher oder Festwertspeicher EAROM.

Mit dem Mikroprozessor MP ist ferner eine elektronische Uhr CL verbunden.

In dem rechten Bereich dieses Feldes 20 sieht man einen Abtaster SC, welcher sowohl mit einer Sichtanzeige DP als auch mit einem Tastenfeld KB kommuniziert. Dieser Scanner kann ständig die Sichtanzeige DP und die über das Tastenfeld KB

eingegebenen Werte abtasten und an den Mikrocomputer weiterleiten.

Ferner ist in dem linken Bereich des Feldes 20
ein Modem M vorgesehen. Über dieses Modem M ist
die zentrale Steuer- und Monitoreinheit CCU mit
dem Stromnetz 12 des Hauses verbunden.

In der unteren Hälfte dieser Figur 2 sieht man
wiederum verschiedene dezentrale Steuereinheiten
DCU, welche jeweils ein Modem M enthalten. Verbunden
mit diesen DCU's sind Stellmotoren, welche in
verschiedenen Stellungen anhalten können. Im Ausführungsbeispiel werden diese Motoren zum Einstellen
von Heizkörperventilen VP verbunden.

Die dezentralen Steuereinheiten DCU steuern Elektromotoren, welche Mikroventile für Heizradiatoren
verstellen können. In der DCU ist jeweils die
gesamte Elektronik integriert. Diese Elektronik
beinhaltet den Adreßdekoder, den Temperaturfühler
und die Übertragungsschaltung. Aus Sicherheitsgründen
arbeiten der Motor und die Elektronik mit einer
Schutzkleinspannung (unter 42 V), die über die
Netz-Schnittstellen aus dem Wechselstromnetz gewonnen wird. Der Elektromotor ist in der Lage, das
Ventil nicht nur in die Endstellungen "auf" und
"zu", sondern auch in mehrere Zwischenstellungen,
d.h. verschiedene Öffnungsstellungen, zu bringen.

Der Temperaturfühler registriert die Raumtemperatur
und meldet sie an die DCU. Diese wiederum öffnet
oder schließt, vollständig oder teilweise, mit dem Elektromotor das Mikroventil, um die eingestellte Temperatur auszuregeln.

Die Datenübertragung erfolgt über die Leitungen des Stromnetzes (110/220 V; 50/60 Hz) mittels frequenzmodulierter Signale. Der Datenverkehr wird von der zentralen Steuer- und Monitoreinheit CCU aufgebaut, und die angesprochene dezentrale Steuereinheit DCU meldet aktuelle Parameter ihres Raumes (z.B. Temperatur, Rauch vorhanden usw.). Die zentrale Steuer- und Monitoreinheit fragt permanent alle dezentralen Steuereinheiten DCU zyklisch ab, vergleicht die programmierten Daten mit den Ist-Daten und steuert die dezentrale Steuereinheit DCU entsprechend neu an. Die dezentralen Steuereinheiten werden ebenfalls wie die zentrale Steuer- und Monitoreinheit nur an eine Steckdose des Hauptstromnetzes angeschlossen. Die dezentralen Steuereinheiten können in Verbindung mit dem Ventilstellglied (VP) entweder Wasserventile für Warmwasserzentralheizungen oder Luftschieber für Heizungen mit Warmluft oder Klimaanlagen ansteuern. Ihre Funktion ändert sich hierdurch nicht.

Die dezentralen Steuereinheiten DCU können, jeweils mehrere von ihnen, ein und dasselbe Gerät steuern, sie können aber auch mehrere äußere Geräte gleichzeitig steuern. Diese Option wird technisch durch eine "open collector"-Schaltung realisiert. An diese beiden Ein-/Ausgänge können somit Alarmkontakte oder Rolladenbetätigungskontakte von Türen oder Fenstern angeschlossen werden, wodurch das Thermo-Control-System ohne weitere erhebliche Kosten zum Hausalarm und Schließsystem ausgebaut werden kann. Solche angesprochenen Fensterkontakte können aber auch zur Energieeinsparung verwendet werden. Wenn in einem Raum gelüftet wird und die Fenster versehentlich längere Zeit offengelassen werden, fällt, wenn die Außentemperatur niedriger ist, die Raumtemperatur sehr schnell ab. Bei den meisten Heizungsprogrammen wird, nach einem solchen Temperaturabfall in einem Raum, mit einer gewissen Zeitverzögerung, wegen der gemessenen niedrigen Temperatur, das Heizventil geöffnet und damit die Heizung in diesem Raum eingeschaltet werden. Wenn ein Fenster versehentlich längere Zeit offengelassen wird, hätte dies den Erfolg, daß, wegen der falschen Bedienung, gerade mit einem Energiesparsystem unnötig viel Heizöl verbrannt wird. Dies kann dadurch verhindert werden, daß beim Öffnen des Fensters durch Meldung von den Fensterkontakten an die dezentrale Steuereinheit DCU ein Signal abgegeben wird, aufgrunddessen das Heizkörperventil in diesem Raum geschlossen wird, unabhängig von der Raumtemperatur.

Als Option kann bei der erfindungsgemäßen Thermo-Control-Anordnung eine weitere Komponente angeschlossen werden. Diese regelt den Mischer, der die Wasservorlauftemperatur des Heizungsbrenners in Abhängigkeit von den Temperaturgradienten der einzelnen Räume bezogen auf die Außentemperatur regelt. Der Aufbau des Mischers MX entspricht dem der dezentralen Steuereinheit DCU, jedoch mit dem Unterschied, daß als Ventil ein 4-Wege-Drehventil vorgesehen ist. Der Temperaturfühler kontrolliert die Wasservorlauftemperatur. Bei Einsatz dieser Komponente wird eine weitere Energieeinsparung erzielt, da hiermit die benötigte Primärenergie zur Erhitzung des Heizungswassers wesentlich besser dosiert werden kann, weil der Temperaturgradient entsprechend dem Programm berücksichtigt wird.

Die wichtigsten Merkmale dieses Ausführungsbeispiels, welches ein Thermo-Control-System betrifft, sind zusammengefaßt in die folgenden:

Die wichtigsten Merkmale dieses Ausführungsbeispiels, die zentrale Steuer- und Monitoreinheit CCU, wird im Hauptwohnraum, z.B. an der Wand, installiert;
die Stelleinrichtungen VP werden in jedem Raum an jedem Heizkörper installiert;
am Heizungsbrenner wird, falls es erwünscht ist, ein Mischer installiert;
der Benutzer kann mit der zentralen Steuer- und Monitoreinrichtung CCU die Temperatur jedes Raumes vorprogrammieren und kontrollieren, ohne daß er in die verschiedenen Räume oder gar zu den einzelnen Heizkörpern gehen müßte;
die Temperatur kann automatisch oder zeitabhängig oder durch Direkteingabe angehoben oder abgesenkt werden;
es können bis zu 15 Räume kontrolliert werden, und, bei Einsatz eines zusätzlichen Moduls, bis zu 256 Räume;

durch automatische Kontrolle und Programme werden 25 bis 50 % der Primärenergie eingespart; die Bedienung des Systems ist sehr leicht und bequem; das System kann kostengünstig in alten und in neuen Häusern installiert werden; es ist keine spezielle Verdrahtung für die Installation erforderlich, vielmehr wird das in jedem Haus vorhandene Stromnetz zur Steuerung benutzt; aufgrund der Möglichkeit, durch einen Erweiterungsbaustein das System auf 256 Räume zu erweitern, ist es auch für größere Wohnhäuser, Bürogebäude oder Hotels günstig anwendbar; und mit einem Erweiterungsbaustein in den dezentralen Steuereinheiten DCU kann das System zu einem Haus-Alarm- und Schließsystem erweitert werden.

Das beschriebene Thermo-Control-System ist lediglich ein Ausführungsbeispiel der vielfältigen Anwendungsmöglichkeiten der erfindungsgemäßen Anordnung. Die Beschränkung auf dieses Ausführungsbeispiel erfolgte lediglich, um den Rahmen der vorliegenden Anmeldung nicht zu sprengen. Es wird jedoch ausdrücklich darauf hingewiesen, daß es noch eine Vielzahl von Anwendungsmöglichkeiten der vorliegenden Erfindung gibt, von denen auch in der vorhergehenden Beschreibung lediglich ein Bruchteil, und dieser nur beispielhaft, angesprochen wurde.

Ansprüche:

1. Anordnung zur Einstellung und zur Voreinstellung von Ein- und Ausschaltvorgängen und von Zustandsbereichen in verschiedenen Räumen von Gebäuden von einem Raum aus, gekennzeichnet durch eine zentrale Steuer- und Monitoreinheit (CCU), welche über das Stromnetz des Gebäudes kommunizierend mit einer Anzahl von, z.B. n, dezentralen Steuereinheiten (DCU) verbunden ist, welche die gewünschten Schalt- oder Steuerschritte auslösen.

2. Anordnung nach Anspruch 1, dadurch gekennzeichnet, daß die dezentralen Steuereinheiten (DCU) mit Schaltern elektrischer Einrichtungen (MOT, VP) verbunden sind.

3. Anordnung nach Anspruch 1 oder 2, dadurch gekennzeichnet, daß Motoren (MOT) vorgesehen sind, welche von den dezentralen Steuereinheiten (DCU) steuerbar sind.

4. Vorrichtungen nach Anspruch 3, dadurch gekennzeichnet, daß die Motoren (MOT) mit Stellgliedern (VP) verbunden sind.

5. Anordnung nach Anspruch 1 oder 2, dadurch gekennzeichnet, daß sowohl die zentrale Steuer- und Monitoreinheit (CCU) als auch die dezentralen Steuereinheiten (DCU) Netz-Schnittstellen enthalten.

6. Anordnung nach einem oder mehreren der vorhergehenden Ansprüche, dadurch gekennzeichnet, daß die dezentralen Steuereinheiten (DCU) direkt mit den Stellgliedern (VP) verbunden sind.

7. Anordnung nach einem oder mehreren der vorhergehenden Ansprüche, dadurch gekennzeichnet, daß die dezentralen Steuereinheiten (DCU) kommunizierend mit Fühlern verbunden sind.

8. Anordnung nach einem oder mehreren der vorhergehenden Ansprüche, dadurch gekennzeichnet, daß die dezentralen Steuereinheiten (DCU) und die Fühler innerhalb einer einzigen Baueinheit angeordnet sind.

9. Anordnung nach einem oder mehreren der vorhergehenden Ansprüche, dadurch gekennzeichnet, daß die dezentralen Steuereinheiten (DCU) und die Stelleinrichtungen (VP) jeweils innerhalb ein und derselben Baueinheit angeordnet sind.

10. Anordnung nach einem oder mehreren der vorhergehenden Ansprüche, dadurch gekennzeichnet, daß die dezentralen Steuereinheiten (DCU), die Fühler und die Stelleinrichtungen (VP) jeweils innerhalb einer Baueinheit angeordnet sind.

11. Anordnung nach einem oder mehreren der vorhergehenden Ansprüche, dadurch gekennzeichnet, daß die Steuer- und Monitoreinheit (CCU) einen Mikroprozessor (MP) und eine zugeordnete Logik umfaßt.

12. Anordnung nach einem oder mehreren der vorhergehenden Ansprüche, dadurch gekennzeichnet, daß die Steuer- und Monitoreinheit (CCU) ein Tastenfeld (KB) zur Dateneingabe und eine Sichtanzeige (DP) umfaßt.

13. Anordnung nach einem oder mehreren der vorhergehenden Ansprüche, dadurch gekennzeichnet, daß die Steuer- und Monitoreinheit (CCU) eine akustische Alarmeinheit (A) enthält.

14. Anordnung nach einem oder mehreren der vorhergehenden Ansprüche, dadurch gekennzeichnet, daß die Steuer- und Monitoreinheit eine elektronische Uhr (CL) enthält.

15. Anordnung nach Anspruch 14, dadurch gekennzeichnet, daß die elektronische Uhr (CL) von einer Batterie gespeist wird.

16. Anordnung nach einem der Ansprüche 14 oder 15, dadurch gekennzeichnet, daß eine batteriegespeiste Pufferschaltung für die elektronische Uhr (CL) vorgesehen ist.

17. Anordnung nach einem oder mehreren der vorhergehenden Ansprüche, dadurch gekennzeichnet, daß die zentrale Steuer- und Monitoreinheit (CCU) programmierbar ausgebildet ist.

18. Anordnung nach einem oder mehreren der vorhergehenden Ansprüche, dadurch gekennzeichnet, daß die dezentralen Steuereinheiten (DCU) jeweils einen Mikroprozessor (MP) und eine zugeordnete Logik umfassen.

19. Anordnung nach einem oder mehreren der vorhergehenden Ansprüche, dadurch gekennzeichnet, daß die dezentralen Steuereinheiten (DCU) Temperatursensoren, Rauchdetektoren, Audio-Alarmeinrichtungen (A), optische Signaleinrichtungen und/oder weitere Sensoren enthalten.

20. Anordnung nach einem oder mehreren der vorhergehenden Ansprüche, dadurch gekennzeichnet, daß die Stelleinrichtungen mit Drehventilen, Schieberventilen, Dämpfern und/oder anderen mechanischen Einrichtungen oder mit Schaltern weiterer Einrichtungen, zum Beispiel mit Motoren (MOT) zur Betätigung von Rolläden oder Jalousien, wirkungsmäßig verbunden sind.

21. Anordnung nach einem oder mehreren der vorhergehenden Ansprüche, dadurch gekennzeichnet, daß die Anzeige der Heizkosten pro Zeiteinheit bei der gegenwärtigen Heizleistung auf der Anzeige darstellbar ist.

22. Anordnung nach Anspruch 21, dadurch gekennzeichnet, daß ein mit einer dezentralen Steuereinheit (DCU) verbundener Fühler zum Fühlen der pro Zeiteinheit durch die Brennstoffleitung strömenden Brennstoffmenge vorgesehen ist.

23. Anordnung nach einem oder mehreren der vorhergehenden Ansprüche, dadurch gekennzeichnet, daß Codierer und Decodierer vorgesehen sind, welche die Zuordnung der verschiedenen Signale zu bestimmten dezentralen Steuereinheiten gewährleisten.

24. Anordnung nach einem der vorhergehenden Ansprüche, dadurch gekennzeichnet, daß ein Scanner vorgesehen ist, welcher ständig zyklisch die Zustände der verschiedenen Fühler und/oder der Stellungen der verschiedenen Stelleinrichtungen (VP) abfragt.

25. Anordnung nach einem der vorhergehenden Ansprüche, dadurch gekennzeichnet, daß nicht-flüchtige Speicher (EAROM) vorgesehen sind.

FIG.1

FIG. 2

Bedeutung der Funktionstasten

FIG. 3

| C | - Löschen von "TIME, TMP, ROOM" Daten |
|---|---|
| ENTER | - Abspeichern eines Satzes (8 Zeichen) |
| NORM | - Normale Tagesprogrammierung |
| EXTD | - Zeitabhängige Programmierdaten (selbstlöschend) |
| OPT | - Programmierung der Optionen |
| PROG | - Freigabe der Programmierung für NORM, EXTD u. OPT |
| DATE | - Stellen der Uhr und Eingabe des Datums |
| AM/PM | - Wahl ob Vormittag oder Nachmittag (USA) |
| TMP | - Abfrage des Ist-Wertes der Temperatur |
| END | - Beenden der verschiedenen Funktionsroutinen |

Europäisches Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>DE - A - 2 832 942</u> (BROWN BOVERI)<br><br>* Seite 5, Zeile 31 - Seite 8, Zeile 10; Seite 13, Zeile 22 - Seite 15, Zeile 10; Seite 18, Zeile 11 - Seite 19, Zeile 24; Seite 20, Zeilen 23-25; Seite 21, Zeilen 6-11, 24-31; Seite 22, Zeilen 24-31; Abbildungen 1-8 *<br><br>-- | 1-6, 11-14, 17-20, 23-25 |
| | <u>DE - A - 2 047 725</u> (HONEYWELL)<br><br>* Seite 1, Zeilen 1-7; Seite 4, Zeile 17 - Seite 5, Zeile 8; Seite 6, Zeile 24 - Seite 7, Zeile 36; Seite 11, Zeilen 15-34; Seite 12, Zeilen 8-31; Abbildungen 1,7 *<br><br>-- | 1-12, 17-20, 23,24 |
| E | <u>EP - A - 0 019 344</u> (TRICENTROL)<br><br>* Seite 7, Zeile 26 - Seite 8, Zeile 16; Seite 9, Zeile 35 - Seite 10, Zeile 12; Seite 11, Zeilen 22-39; Abbildungen 1, 2,4 *<br><br>-- | 11,13-18,21, 22 |
| A | <u>DE - A - 2 819 032</u> (WALTHER-BURO-MASCHINEN)<br><br>* Seite 6, Zeile 1 - Seite 8, Zeile 8; Abbildung *<br><br>---- | 1,11 |

**KLASSIFIKATION DER ANMELDUNG (Int. Cl.³)**

H 02 J 13/00

**RECHERCHIERTE SACHGEBIETE (Int. Cl.³)**

H 02 J 13/00
G 05 D 23/19
G 05 D 23/20
23/24

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 26-08-1981 | V. HELOT |

EPA form 1503.1  06.78

BAD ORIGINAL